(19) Europäisches Patentamt
European Patent Office
Office européen des brevets

(11) EP 4 632 695 A1

(12) EUROPEAN PATENT APPLICATION

(43) Date of publication:
15.10.2025 Bulletin 2025/42

(51) International Patent Classification (IPC):
G06V 20/59 $^{(2022.01)}$    G06V 40/10 $^{(2022.01)}$

(21) Application number: 24170105.1

(22) Date of filing: 12.04.2024

(52) Cooperative Patent Classification (CPC):
G06V 20/597; G06V 40/103

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Valeo Comfort and Driving Assistance
94000 Créteil (FR)

(72) Inventors:
• GAMAL, Roba
94000 Créteil (FR)

• GAMIL, Abdelrhman
94000 Créteil (FR)
• ASHRAF, Mariam
94000 Créteil (FR)
• ELFAKHARANY, Ahmed
94000 Créteil (FR)
• KHALIFA, Aliaa
94000 Créteil (FR)

(74) Representative: Delplanque, Arnaud
Valeo Comfort and Driving Assistance
6 rue Daniel Costantini
94000 Créteil (FR)

(54) **A METHOD FOR AN ASSESSMENT OF A SITTING POSITION OF AN OCCUPANT INSIDE A VEHICLE AND AN ASSOCIATED MONITORING SYSTEM**

(57)    A method for an assessment of a sitting position of an occupant inside a vehicle, the method being characterized by the following steps:

a. capturing (S21) an image of the occupant,

b. analyzing (S22) the image of the occupant to provide 2D coordinates in the image of pre-established anatomical landmarks and parameters representative of a pose of the occupant,

c. computing (S23) distances using said 2D coordinates of said pre-established anatomical landmarks,

d. normalizing (S24) the computed distances using the parameters representative of a pose of the occupant,

e. computing (S25) a mean anatomical distance using the normalized distances,

f. comparing (S26) the mean anatomical distance to a threshold value to assess the sitting position of said occupant.

A corresponding monitoring system is also described.

**Fig.2**

EP 4 632 695 A1

## Description

FIELD OF THE INVENTION

The present disclosure relates to a driver monitoring system installed inside a vehicle.

In particular, the present disclosure relates to a method to assess the siting position of an occupant inside a vehicle, more specifically, whether the occupant is leaning backward or forward while seated.

TECHNICAL BACKGROUND

Driver Monitoring Systems (DMS) are typically implemented in vehicles equipped with a driver-assistance system and are meant to oversee the driver's behavior. With the help of sensing devices, lack of attention or drowsiness may be detected and thus reduce the risk of traffic incident. Furthermore, other behavior patterns might be monitored as well to prevent any conduct that might be deemed inadequate or potentially dangerous behind the wheel.

It is therefore beneficial to have a better understanding of the sitting position of the driver, while limiting computational time and remaining cost-effective.

SUMMARY OF THE INVENTION

In this context, the invention provides a method in order to assess of a sitting position of an occupant, i.e. the driver of a vehicle, and whether he/she is leaning forward or backward in his/her seat and how often is this behavior repeated while he/she is driving.

A method for an assessment of a sitting position of an occupant, primarily the driver, inside a vehicle is therefore described. Such a method includes the following steps:

a. capturing an image of the occupant,
b. analyzing this image of the occupant to provide 2D coordinates in said image of pre-established anatomical landmarks and at least one parameter representative of a pose of the occupant,
c. computing distances using said 2D coordinates of said pre-established anatomical landmarks, here, the distances correspond to Euclidean distances in the image,
d. normalizing the computed distances using the parameters representative of a pose of the occupant,
e. computing a mean anatomical distance using the normalized distances,
f. comparing this mean anatomical distance to a threshold value to assess the sitting position of the occupant.

Such a method provides a cost-effective, quick and simple way to determine the sitting position of the occupant. Simply by analyzing a captured image, i.e. a two-dimensional information, one might retrieve three-dimensional information. Hence, information regarding how the occupant is positioned inside the vehicle can be determined, for instance, whether the occupant is leaning forward, backward, or if she/he remains in a neutral position. Moreover, the described method relies on off-the-shelf cameras, such as RGB or greyscale camera as a mean to capture an image of the occupant, which is a cost-effective solution, compared to more sophisticated systems. Indeed, such optoelectronic measurement systems would involve three-dimensional imaging, using time-of-flight measurements for instance, that would entail more components, higher computation time, more bulkiness and/or a higher cost.

More specifically, in an embodiment of the invention, the at least one parameter representative of a pose of the occupant may comprise a yaw angle of a head pose of this occupant. Such an angle describes an orientation of the head regarding a fixed point, generally an imaging device.

Likewise, the at least one parameter representative of a pose of the occupant may comprise a pitch angle of a head pose of this occupant. This angle describes another orientation of the head, still regarding a fixed point i.e. the imaging device.

In addition, the step of analyzing the image of the occupant to provide 2D coordinates of pre-established anatomical landmarks and the least one parameter representative of a pose of the occupant is performed by a machine learning algorithm. Such a machine learning algorithm can be a deep learning algorithm. This algorithm, either a machine learning or deep learning algorithm, advantageously reduce the computation time needed.

The pre-established anatomical landmarks that are retrieved, are situated in an area corresponding to the occupant's face. For instance, these landmarks can be placed on either side of the occupant's face, more precisely in the upper jaw and/or cheeks areas.

Furthermore, the pre-established anatomical landmarks can be chosen, so that two distances are computed using the said 2D coordinates in the captured image, one distance represents a vertical bone structure, while the other distance represents a horizontal bone structure.

In some embodiment, the threshold value is ascertained by performing a calibration which comprises repeating the following steps during a calibration time period:

a. capturing an image of the occupant,
b. analyzing the image of the occupant to provide 2D coordinates of pre-established anatomical landmarks and at least one parameter representative of a pose of the occupant,
c. computing distances using the said 2D coordinates of the said pre-established anatomical landmarks,

d. normalizing the computed distances using the at least one parameter representative of a pose of the occupant,

e. computing a mean anatomical distance using the normalized distances,

and at the end of the calibration time period, computing the threshold value as a function of a mean of all the mean anatomical distances computed during the calibration time period.

Such a calibration can be run every time a new occupant is detected inside the vehicle.

Here, the assessment of the sitting position of the occupant comprises assessing whether said occupant is leaning forward, backward, or is in a neutral position, the latter correspond an ideal driving position.

Therefore, the threshold value used in the assessment can be ascertained, while the said occupant remains sat in the neutral position. This way the assessed sitting position is compared to the neutral position, in order to establish whether the driving is leaning forward or backward.

In the present disclosure, a counter is set-up, to count the occurrence of the occupant leaning forward.

Furthermore, in an embodiment, based on the counter value, an alert about an eyesight condition of the occupant is raised.

The invention also describes a monitoring system configured to perform an assessment of the sitting position of an occupant inside a vehicle, the monitoring system comprising of an imaging device, an image processing unit, and a computation unit, wherein:

a. the imaging device is configured to capture an image of the occupant,

b. the image processing unit is configured to retrieve 2D coordinates of pre-established anatomical landmarks and at least one parameter representative of a pose of the occupant from the captured image,

c. the computation unit establishes a normalized mean anatomical distance based on the 2D coordinates and the at least one parameter representative of a pose of the occupant,

d. The computation unit is configured to compare the normalized mean anatomical distance to a stored threshold value so as to provide an assessment of the sitting position of the occupant.

In this monitoring system, the imaging device can be an RGB camera.

In another embodiment, the imaging device can be an infrared camera.

The image processing unit is suitable to perform an image analysis by means of an artificial neural network. It is therefore suitable to implement a machine learning algorithm, more specifically a deep learning algorithm.

DETAILED DESCRIPTION

Embodiments are illustrated by way of example, and not by way of limitation, and will be more fully understood with reference to the following detailed description when considered in connection with the figures in which:

Figure 1 represents part of a vehicle, including a monitoring system.

Figure 2 is a flowchart representing steps of a method applied by the monitoring system of figure 1.

Figure 3 is a flowchart representing steps of a calibration method, that may form part of the method of Figure 2.

Figure 4 represents an image of the occupant's face, the acquisition of such an image being done according to the flowchart described in figure 2, while the occupant is seated in an ideal position. Examples of pre-established anatomical landmarks and computed distances required for the assessment, are pictured.

Figure 5 shows an image acquired while the occupant is seated in a forward position, with same pre-established anatomical landmarks and computed distances as in figure 3.

Generally speaking, the present disclosure provides a method and a monitoring system 3 meant to assess the sitting position of an occupant 1 inside a vehicle comprising of a cabin wherein the occupant or eventually occupants are seated. By occupant 1, it is primarily referred to the driver of the vehicle, which is seated at the front of the cabin. The vehicle can correspond to a car, a plane, a motorcycle, or any suitable mean of transportation wherein an occupant can be seated.

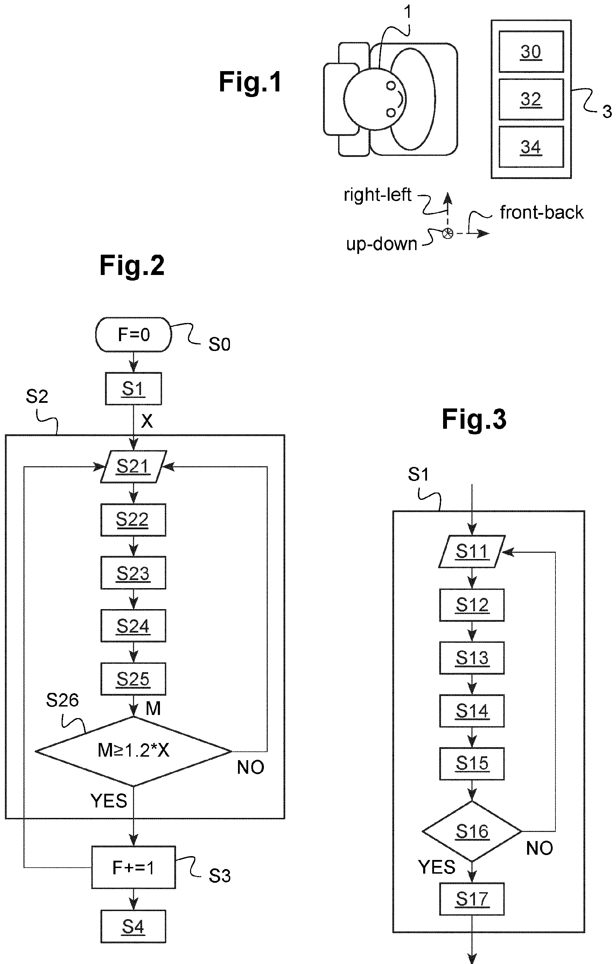

Inside the cabin, a monitoring system 3, for instance, a driver monitoring system, known as a DMS, is installed to monitor the occupant 1 i.e. here the driver. Therefore, the monitoring system 3 can be placed in front of the driver, to oversee his/her behavior. This monitoring system 3 is represented in figure 1.

Such a monitoring system 3 comprises, in a possible embodiment, an imaging device 30, an image processing unit 32, and a computation unit 34.

The imaging device 30 is configured to capture an image i11, i21, of the occupant 1, especially the occupant's face and upper torso region using a light sensitive pixel matrix. For instance, the imaging device 30 consists of imaging optics and an array of pixels i.e. the pixel matrix, each pixel being able to record an intensity information as a greyscale value, or as an RGB value, RGB standing for the Red Green Blue color model. Here, the imaging device 30 refers to a camera.

The captured image i11, i21, therefore contains two-dimensional i.e. 2D spatial information of the occupant 1 and its surrounding. The content of the captured image i11, i21 is limited by a field of view of the imaging device 30.

The image processing unit 32, as suggested by its name, is then suited to analyze the captured image i11, i21, for instance, to retrieve coordinates of anatomical landmarks from the occupant's image i11, i21, and/or perform facial recognition of the occupant 1, etc.

Here, the anatomical landmarks chosen on the occupant's face and/or upper torso region are selected beforehand, therefore, they are referred to as pre-established anatomical landmarks 210. These pre-established anatomical landmarks 210 can be chosen in pairs, given the symmetric property of a human body and face.

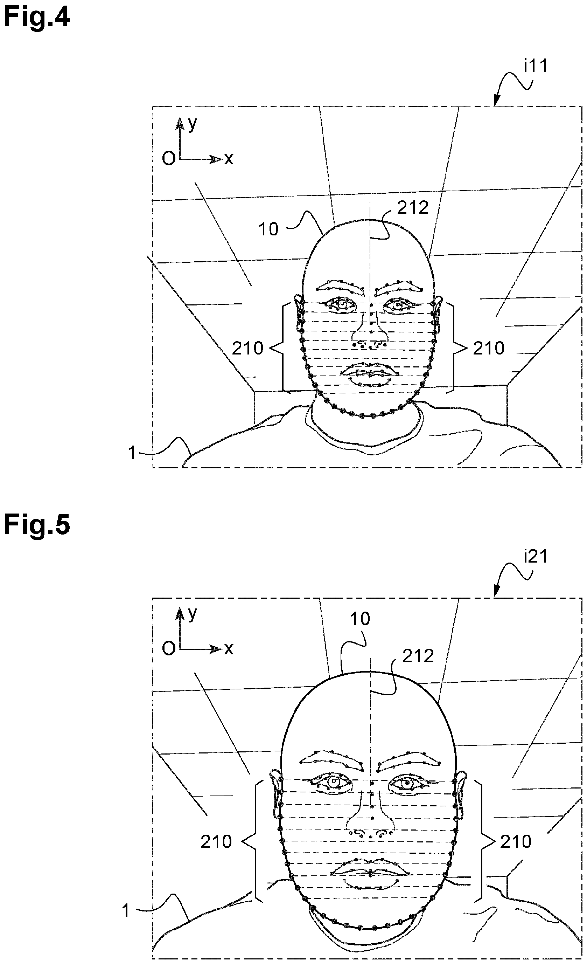

Example of such a captured image i11, i21, and such pre-established anatomical landmarks 210 are illustrated in figure 4.

The image processing unit 32 is part of an Image Signal Processor, called an ISP, or be part of a more complex system, such as an electronic control unit, referred to as an ECU. This ECU is configured to control one or more electrical system embedded in a vehicle, and usually comprises of a microcontroller, a memory unit. Such an ECU can for instance be configured to run software and algorithms meant for a task. Here, the task would be processing digital images.

The computation unit 34 is configured to perform various calculations and tasks, using for instance an electronic control unit (ECU). Both the computation unit 34 and the image processing unit 32 may correspond to a same component, that is suitable for a various range of tasks. For instance, both the image processing unit 32 and the computation unit 34 may refer to a same electronic control unit. However, in order to clarify the description, the computation unit 34 and the image processing unit 32 are regarded as separated organs in the present description.

Furthermore, the monitoring system 3 is possibly completed by an illumination device, in order to provide an illumination of the occupant 1 and its surroundings, while minimizing fluctuation of the illumination intensity for instance.

The monitoring system 3 described herein is suitable for monitoring the occupant's behavior. For instance, it can be used to assess the sitting position of the occupant 1. In particular, in the present disclosure, such an assessment aims to tell whether the occupant 1 is seated in an ideal state equated to a neutral state or neutral sitting position, or if he/she is leaning forward or backward, and also, provides an occurrence or frequency of how often the driver deviates from the idle sitting position. Here, the forward and backward direction are described in reference to a direction where the occupant 1 is facing while seated in a car seat, in a normal driving position.

This information on the sitting position and/or occurrence of a certain sitting position during a driving period provides insightful clues about the behavior of the occupant 1, and/or driving habits, which might raise a warning when necessary. For example, using such information, it may be suggested to the driver to readjust the car seat, as leaning forward or backward might be a compensatory behavior, indicating the driver's discomfort in the car seat as arranged.

Likewise, an assessment of whether the driver is leaning forward or backward, and a which frequency can be used as an indicator of the driver's eyesight, as the tendency to lean forward is a compensatory behavior for near-sightedness. One might suggest the occupant 1, with a warning, to go for an eye-check.

In addition to the aforementioned compensatory behavior indicative of a discomfort while driving, potentially dangerous behavior might be detected as well.

For instance, signs of drowsiness, where the frequent forward movement from the driver might be combined with other assessment methods to determine if the driver might be falling asleep.

Another potentially dangerous situation might arise when the occupant leans forward while the illumination device is on, especially when the illumination device emits light in the infrared range. Such a wavelength range, between 800 nanometers and 1 millimeter is invisible to the human eye; and exposure to infrared light can be dangerous, when the distance between the occupant 1 and the illumination device is too small.

The disclosed method provides a way to detect all these dangerous and/or uncomfortable situations, by assessing the occupant 1 position in his/her seat. Here, the embodiment wherein the method assesses the sitting position with the aim of establishing a potential eyesight defect, is described. Such a method is detailed in figure 2 using a flow chart.

This method is started when the occupant 1, i.e. here, the driver, gets in the vehicle, which means a new occupant 1 is in the driver seat. This starting step would correspond to a step S0 in figure 2. The method then runs in loops, until it is stopped when there is apparently no driver anymore (i.e. the driver has left the car).

In order to detect whether the driver is or is not present inside the vehicle, different solutions are available, such as a face detection algorithm to detect the presence of an occupant 1 when the occupant 1 gets into the imaging device 30 field of view, or/and simply a weight sensor on the driver's seat, or/and when the ignition is switched on or off.

Here, in this particular embodiment, the method is started when an occupant 1 presence is detected by the imaging device 30 of the monitoring system 3 and stopped when no occupant 1 is detected anymore. In order to determine the presence or not of an occupant 1 can for instance be done using the image processing unit 32 included inside the monitoring system 3.

Once the method is started, a calibration S1 is then run immediately after. For instance, this calibration S1 can occur in the 15 seconds time window after the driver i.e. the occupant 1 has gotten into the vehicle, and put on his/her seatbelt, before starting the ignition. During this time period, called a calibration time period $T_{cab}$, it can be considered that the driver is typically seated in an ideal sitting position or neutral position, as allegedly he or she is the most aware of his or her posture at this moment. By ideal sitting position or ideal position, it is referring to the default sitting position the driver would adopt instinctively when placed in a car seat. All other sitting position are referred to by comparison to the ideal sitting position. Therefore, the calibration S1 is meant to establish a threshold value X, this threshold value X would then represent the ideal sitting position for the occupant 1.

As a variant, this calibration S1 can be run every time a new occupant 1 is detected, for instance, using a facial recognition algorithm, and the resulting threshold value X, reused every time the same occupant 1 is driving the vehicle. In this case, the threshold value would be stored in a memory. Another possibility would be to set a fixed threshold value X based on a statistical study done by the applicant. In this case, no calibration S1 would be necessary in the disclosed method,

Here however, we consider the case where the calibration S1 is run every time when the disclosed method is used.

The calibration S1 is described in detail in the flow chart on figure 3.

During the 15 seconds time period, or a time period of any suitable duration, the calibration S1 is run, and consists in several steps that are run consecutively and in loops for the duration of the calibration S1. In other words, while a measured time T started at the beginning of the calibration S1 is smaller than the calibration time period $T_{cab}$, the calibration S1 is carried on.

Here, the different steps involve: capturing S11 an image i11 of the occupant 1, analyzing S12 this image i11, computing S13 distances based on this image i11, normalizing S14 these distances, computing S15 a mean anatomical distance and storing its value, before computing S17 the threshold value X at the end of the calibration time period $T_{cab}$.

First, the calibration S1 involves capturing S11 an image i11 of the occupant 1 using the imaging device 30, onto which an appropriate set of acquisition parameters, like exposure time for instance, is applied.

The image i11 reproduces on the imaging device 30 field of view the occupant 1 and its surrounding. As mentioned before, this image i11 can be in greyscale, with values ranging from 0 to 255 for instance, or in color-values, in the RGB color model. Here, the image is in greyscale, and corresponds to the face of the occupant 1, as well as his/her shoulders, while he or she is seated a neutral or ideal sitting position. Such an image is shown in figure 4.

A second step, by analyzing S12 the acquired image using the image processing unit 32, retrieves 2D coordinates of pre-established anatomical landmarks 210 inside the image i11 plane, as well as a least one parameter representative of a pose 212 of the occupant 1. Here, several parameters are considered.

The pre-established anatomical landmarks 210 correspond to morphological features established on a human face and/or body. Here, as the imaging device 30 field of view is limited to the upper part of the occupant's face, all the landmarks are selected from the corresponding region in the image. The landmarks discretely map the main facial features of the occupant 1, like the outline of the eyes, mouth, chin, etc, or the center of the pupil, tip of the nose, etc.

A coordinate system is also chosen in the image plane, this coordinate system is later referred to as Oxy, wherein O represents the origin from which coordinates are computed, Ox represents a first axis, and Oy represents a second axis. This coordinate system Oxy is represented in figure 4 and in figure 5.

Each landmark in the image of the occupant 1 can therefore be described by a set of two coordinates, written as $(x_i, y_i)$ in the coordinate system Oxy, wherein the i index corresponds to the index of the landmark the set of coordinates is associated to.

The image processing unit 32 also retrieve parameters that are representative of a pose 212 of the occupant 1, i.e. representative of an orientation in a three-dimensional space. In particular, as the imaging device 30 field of view is limited to the upper body region, the pose of the occupant 1 refers to a head pose of the occupant 1. The head pose 212 describes orientations of a human head relative to the imaging device 30 which is supposed to be still. A frame of reference is therefore set for the head, and the head pose describes the orientation of this frame of reference compared to the vehicle frame in which the imaging device 30 is set. This vehicle frame can be described using three axes: a back-front axis, oriented from a back to a front of the vehicle, a right-left axis, oriented from a left to a right side of the vehicle and a down-up axis, oriented from a down to an up side of the vehicle. These axes are usual axes when a vehicle is considered, and they are oriented accordingly. These axes are represented on figure 1.

The head pose is usually described using three parameters, which are part of the aforementioned parameters representative of a pose 212 of the occupant 1. These three parameters correspond to three angles, a yaw angle, a pitch angle and a roll angle, often refer to as Euler angles. These three angles describe the orientation of the head of the occupant 1 with respect to the frame of the vehicle which is supposed to be fixed.

The yaw angle refers to a rotation about the down-up axis, the roll angle refers to a rotation about the back-front axis and the pitch angle refers to a rotation about the right-left axis.

In order to retrieve the parameters representative of a pose 212 of the occupant 1 and the two-dimensional coordinates of the pre-established anatomical landmarks 210, the image i11 is analyzed. Advantageously, this analysis can be perform using approaches based on machine learning. More specifically, approaches based on deep learning are considered here.

Such approaches employ artificial neural networks and/or convolutional neural networks, or any suitable type of deep-learning architecture. Such algorithms are generally divided into three steps, first a face detection, then localization of the facial features in the image plane, and the estimation of the head orientation. Therefore, using a single deep learning algorithm or machine learning algorithm, both the 2D coordinates of the anatomical landmarks and the parameters representative of a pose 212 of the occupant 1 can be retrieved.

For instance, the detailed description of such an algorithm can be found in Prados-Torreblanca, A., Buenaposada, J. M., and Baumela, L., "Shape Preserving Facial Landmarks with Graph Attention Networks", 2022. doi:10.48550/arXiv.2210.07233. Any other suitable algorithm for estimating landmarks and head pose may also considered.

The image processing unit 32 which analyses the image i11, is configured to implement such an artificial neural network or artificial neural networks, in order to run the required algorithm.

Among all possible anatomical, especially facial landmarks, a certain set is selected beforehand. This pre-established set of facial landmarks are then localized on each image of the occupant 1 captured throughout the method. Such pre-established anatomical landmarks 210 on the occupant's face are represented in figure 4.

Here, these facial landmarks are chosen in pairs, and are symmetrical to one-another compared to a facial symmetry plan. It is then 11 pairs of pre-established anatomical landmarks 210 that are detected in the image of the occupant 1 by the algorithm. These 22 anatomical landmarks are situated on the outline of the occupant's upper jaw, cheeks and forehead region.

Other pre-established anatomical landmarks 210 can also be chosen in variants of the present disclosure. These pre-established anatomical landmarks 210 can vary in number, in placement across the occupant's face and can be symmetrical or not.

For instance, in a second embodiment, only two pairs of pre-established anatomical landmarks 210 are necessary, as limiting the number of pre-established anatomical landmarks 210 can be beneficial for reducing computations times. In this second embodiment, a first pair of anatomical landmarks carries a vertical bone structure of the face, and a second pair of anatomical landmarks carries a horizontal bone structure of the occupant's face. The vertical bone structure can, for example, be represented a first landmark placed at the top center of the occupant's forehand, to the center of outline of the chin, where a second landmark would be place. The horizontal bone structure can then, for instance, be characterized where the occupant's face would be the broadest, across the outlines of his/her cheeks.

Once chosen, the pre-established anatomical landmarks 210 are found on the captured image of the occupant 1, once a facial area has been detected.

Here, in this specific example, the algorithm uses a convolutional neural network (CNN) to find the localization of the pre-established anatomical landmarks 210 in the image and returns a set of coordinates in the Oxy coordinate system for each of the pre-established anatomical landmarks 210. Possibly, other anatomical landmarks can also be localized, especially for an accurate head pose estimation, but their coordinates are not of interest in the context of the disclosed method. In fact, the algorithm here returns a total of 33 pairs of anatomical landmarks, from which only some are chosen as the pre-established anatomical landmarks 210.

As in the first embodiment, a total of 11 pairs of pre-established anatomical landmarks 210 were chosen, the image processing unit 32 which run the deep-learning algorithm returns 22 set of coordinates $(x_i, y_i)$, where i ranges from 1 to 22.

In addition to localizing the anatomical landmarks, the deep-learning algorithm also returns head pose orientation, i.e. the yaw angle, the pitch angle, and the roll angle. Here, the parameters representative of a pose 212 of the occupant 1 comprises the yaw angle and the pitch angle.

The image analysis step is followed by a step which comprises computing S13 distances between pairs of the pre-established anatomical landmarks 212, using their 2D coordinates. Examples of such distances are shown with dotted lines in figure 4, which pictures the occupant 1 sitting in the ideal position.

Other combinations between the pre-established anatomical landmarks 210 in order to compute a distance between them is also possible. Likewise, although not shown in the present embodiment, a pre-established anatomical landmark 210 used to compute two distinct distances is also feasible.

The distances are computed by the computation unit 34, which is configured to receive the retrieved 2D coordinates from the image processing unit 32. These distances are calculated in the image plane, and are therefore considered two dimensional.

Here, the distances are defined between symmetric pair of pre-established anatomical landmarks 210, i.e. the pre-established anatomical landmarks 210 are situated on opposite sides of the occupant's face. For instance, the pair of pre-established anatomical landmarks 210 are here on the right and left cheeks and/or upper jaws and/or forehead area. The calculation is done using the Euclidean distance equation, known as:

$$d_{a,b} = \sqrt{(x_a - x_b)^2 + (y_a - y_b)^2}$$

, where $d_{a,b}$ is the distance between a pre-established anatomical landmark a represented by a set of 2D coordinates $(x_a, y_a)$, and a pre-established anatomical landmark b, represented by a set of 2D coordinates $(x_b, y_b)$. Here, in the current embodiment, the pre-established anatomical landmark a and the pre-established anatomical landmarks b are situated on opposite sides of the occupant's face, on the cheeks, upper jaws and forehead area.

These distances reflect the anatomic proportions of the occupant 1, here, his face.

The calibration S1 also comprises normalizing S14 all the computed distances. This step is also done with the computation unit 34, which normalizes all the distances using a normalization value. This normalization value is written as:

$n = \cos(\theta_{yaw}) * \cos(\theta_{pitch})$, wherein n is the normalization value, $\theta_{yaw}$ is the yaw angle value, $\theta_{pitch}$ the pitch angle value.

All the computed distances are therefore divided by the normalization value n to get normalized distances.

This normalization, which is done using the pre-established anatomical landmarks 210 removes the contribution of the head orientation of the occupant 1 for the assessment of his/her sitting position. Said otherwise, this normalization step removes the effects of projecting the occupant's face onto a plane parallel to the imaging device 30, which tends to reduce imaged distances compared true anatomical distances. Therefore, this step allows an accurate evaluation of the position of the driver's face compared to the imaging device 30 while he/she is in the ideal position.

After the normalization step, which can, in a variant of the embodiment, be performed at the same time the distances are calculated, a mean anatomical distance is then obtained by computing S15 the mean of all the normalized distances, using the computation unit 34. The mean anatomical distance is obtained by summing all normalized distances, and dividing the result by the number of normalized distances.

During the calibration S1, the computed mean anatomical distance is stored in a memory storage, for the duration of the calibration S1, i.e. during the calibration time period $T_{cab}$.

The aforementioned steps, that is to say, the capturing S11 of an image i11 of the occupant 1, the analyzing S12 of this image i11 to retrieve necessary information to establish geometric knowledge of the driver's face when sat in the neutral or ideal sitting position, the computation of the normalized distances and the mean anatomical distance are repeated in a loop, for the duration of the calibration S1 step. Each time a new mean anatomical distance is calculated by the computation unit 34, the value is stored.

A step S16 then checks whether the calibration S1 is over or not.

At the end of the calibration S1, a threshold value X is determined, which represents the ideal sitting position of the occupant 1, i.e. a neutral driving posture. This threshold value X is obtained by computing S17 a mean of all the means anatomical distances computed and stored in a memory during the calibration time period $T_{cab}$.

The number of mean anatomical distances calculated during the calibration S1 period depends on the algorithm frame rate, which is given in frames per second.

Here, running all the steps necessary to the obtention of the mean anatomical distance allows an algorithm frame rate of 8 frame per second. Therefore, a new loop, beginning with acquisition of an image of the occupant 1 can be started every 0.125 seconds.

Here, given the calibration S1 time of 15 seconds, a total of 120 images i11 of the occupant 1 are used in order to provide a threshold value.

Ideally, the calibration time period $T_{cab}$ is chosen to be an integer multiple pf the algorithm frame rate.

After the calibration S1, an assessment S2 of the sitting position of the occupant 1 is run throughout the rest of the drive for instance, until the ignition is turned off. Given the employed algorithm has a frame rate of 8 frames per second, a new assessment S2 is started every 0.125 seconds, by capturing a new image i22 of the occupant 1.

Each assessment S2 comprises of several steps, many of which are identical to steps performed during the calibration S1. Here, each assessment S2 comprises capturing S21 the image i22 of the occupant 1, analyzing S22 this image i22, then computing S23 distances based on this image i22 and normalizing S24 these computed values, before computing S25 a mean anatomical distance M. This value is then used to establish an assessment outcome, by comparing S26 the mean anatomical distance M to the threshold value X.

Like in the calibration S1, the assessment S2 begins by capturing S21 an image i21 of the occupant 1 with the imaging device 30 inside the monitoring system. This image includes at least the face and upper body region of the occupant 1. Appropriate acquisition parameters are also set on the imaging device 30.

Such an image i21 is a two-dimensional depiction of a part of the occupant 1 while he/she is seated behind the wheel. However, contrary to the calibration S1, the occupant 1 may no longer be in the ideal sitting position, and might be leaning forward or backward compared to this ideal sitting position, as a possibly compensatory behavior. Such a compensatory behavior might possibly be induced by poor eyesight, for instance short-sightedness.

An example of an image i21 captured during the assessment S2 wherein the occupant 1 is leaning in the forward direction, i.e. toward a front side of the vehicle is illustrated in figure 5.

From this image, using the same deep-learning algorithm as during the calibration S1, 2D coordinates in the image i21 plane, given in the coordinate system Oxy are retrieved, as well as parameters representative of a pose 212 of the occupant 1, by analyzing S22 this image i21. This analysis is done by the image processing unit 32.

The image processing unit 32 analyzes the image i21 using a convolution neural network, in order to place necessary anatomical landmarks, similarly to the calibration S1.

In the present embodiment, these landmarks map the key facial features of the occupant 1, and the image processing unit 32 returns the 2D coordinates of the pre-established anatomical landmarks 210, the same pre-established anatomical landmarks 210 as selected during the calibration S1. Therefore, for each of the 22 landmarks, a 2D coordinate set $(x_i, y_i)$ is returned by the algorithm, where i ranges between 1 and 22 here. Here, given the deep-learning algorithm used, as well as the imaging device 30 field of view, all the landmarks are on the occupant's face. However, it is not excluded, in another embodiment, to have anatomical landmarks placed across the shoulders of the occupant 1, the neck, or the torso region, etc.

The image processing unit 32 also return the head pose of the occupant 1, in particular the pitch angle and the yaw angle, which are comprised in the parameters representative of a pose 212 of the occupant 1.

In the present embodiment, the main focus lies on the head pose of the occupant 1. However, in other embodiments, the pose of the occupant's torso or shoulder might also be of interest, if some of the pre-established anatomical landmarks 210 are placed in that region.

The assessment then continues by computing S23 the distances using the 2D coordinates of the pre-established anatomical landmarks 210 in the Oxy coordinate frame.

The pairs of landmarks between which the Euclidian distance is calculated remain the same as for the calibration S1. In this computing step, distances are calculated, and depict the geometrical structure of the occupant's face. Throughout all captured frames during the run of the method, the same pre-established anatomical landmarks 210 are chosen, and the distances are then calculated between the same two pre-established anatomical landmarks 210.

Here, the 22 pre-established anatomical landmarks 210 are used in pairs. Therefore, in this context, a total of 11 distances are computed, and map several distances across the occupant's face. For instance, these distances can go from one side to the other side of the face. In this example, the landmarks are placed on the outline of the forehead, upper jaws, and cheeks, and form opposite pairs. Such distances are depicted using dotted lines in figure 5, which, for reminder, shows a picture of the occupant 1 acquired during the assessment S2. As for the calibration S1, in other embodiment of this current disclosure, other pre-established anatomical landmarks 210 might be chosen. It is also possible to combine the pre-established anatomical landmarks 210 in different manners, in pairs or not, in order to compute the associated distances.

For instance, in a second embodiment of the invention, only four pre-established anatomical landmarks 210 are selected, and 2 distances are computed. One of these distances represents a vertical structure of the occupant's face, and is calculated using the Euclidean distance between a landmark placed for instance at the top center of the occupant's forehead, and another landmark place at the center of outline of the occupant's chin. A second distance would carry the information of the horizontal structure of the occupant's face, and can be computed using two symmetrical anatomical landmarks, one on the right cheeks, the other on the left cheek of the occupant 1.

A great diversity of pre-established anatomical landmarks 210 and combination of the distances are possible.

It is however advantageous to use two pre-established anatomical landmarks 210 that are far away from each other across the occupant's face. Hence, in the represented embodiment, the pre-established anatomical landmarks 210 are situated on either extremity of the occupant's face. In this way, the Euclidean distance values computed are maximized, and increase the reliability of the morphological information retrieved from the image analysis.

The distances between landmarks are calculated according to the Euclidean distance equation:

$$d_{a,b} = \sqrt{(x_a - x_b)^2 + (y_a - y_b)^2}$$

, where $d_{a,b}$ is the distance between a pre-established anatomical landmark a represented by a set of 2D coordinates $(x_a, y_a)$, and a pre-established anatomical landmark b, represented by a set of 2D coordinates $(x_b, y_b)$.

The next step of the assessment S2, involves normalizing S24 the computed distances. This step aims at removing the influence of the pose of the occupant 1, here, its head pose, in the computed distances, as explained previously for the calibration S1.

Such a normalization is done by dividing all the distances $d_{a,b}$ by a normalization value, which is given by: $n = \cos(\theta_{yaw}) * \cos(\theta_{pitch})$, wherein n is the normalization value, $\theta_{yaw}$ is the yaw angle value, $\theta_{pitch}$ the pitch angle value, like in the calibration S1.

After the normalization, the computation unit 34 returns normalized distances, here, a total of 11 normalized distances.

Then, the computation unit 34 return a mean anatomical distance M by computing S25 a mean over all the normalized distances previously computed. Such a mean anatomical distance is called M.

The value of the mean anatomical distance M is a summary of the facial features of the occupant 1. This mean anatomical distance M is therefore a representation of the whole face of the occupant 1, for a given distance compared to the imaging device 30.

Then, in the assessment S2, the next step consists of comparing S26 the mean anatomical distance M for the acquired image 1 in the current run, to the threshold value X established beforehand in the present embodiment, with the calibration S1.

In the current embodiment, an upper bound and a lower bound of the threshold value X is established, in order to smooth out the possibility of a false alarm occurring.

If the customized threshold value determined during the calibration S1 has a value of X, then, here the upper bound has a value greater than the threshold value X. For instance, if a multiplication factor k greater than 1 is defined, then, the upper bound is defined as k*X, where the * symbolizes a multiplication. For instance, k can be chosen greater than 1.1, for instance, its value can be equal to 1.2. Therefore, the upper bound has here a value of 1.2*X, where the * symbolizes a multiplication.

In a similar manner, the lower bound has a value smaller than the threshold value X. If a multiplication factor j smaller than 1 is defined, the lower bound then has a value defined as j*X. For instance, j can be chosen smaller than 0.9. Here, the value of j is equal to 0.85. The lower bound then has a value of 0.85*X. These values are chosen arbitrarily, based on a statistical study conducted by the applicant.

In order to assess of the sitting position of the occupant 1, i.e. if he/she is leaning forward, backward, or if he/she is still sited in the ideal sitting position, the value of the current mean anatomical distance M is compared to the upper bound and the lower bound.

Thus, there a three possible outcome to this step, two of which are shown in figure 2:

> a. The mean anatomical distance M is smaller than or equal to the lower bound of the threshold value i.e. smaller than or equal to 0.85*X, then, it is assessed that the occupant 1 is leaning backward. This case is not represented in figure 2.
> b. The mean anatomical distance M is bigger than or equal to the upper bound of the threshold value, i.e. bigger than or equal to 1.2*X, then it is assessed that the occupant 1 is leaning forward.
> c. Else, in the case where the mean anatomical M lies between the lower bound of the threshold value and the upper bound of the threshold value, it is considered that the occupant 1 is seated in the ideal sitting position.

Here, on figure 2, only two outcomes are represented, the one where the occupant 1 is seated in the neutral position i.e., the ideal position, and the one where the occupant 1 is leaning forward, as in the described embodiment, the method focuses on detecting if the occupant 1 is leaning forward.

Based on this assessment S2 of the sitting position of the occupant 1, further behavior analysis can be performed. Thanks to the disclosed method, relative closeness or furtherness of the occupant's face, which is significant of his/her sitting position can be deduced from a simple two-dimensional image i21, acquired by an off-the-shelf imaging device 30. Indeed, the anatomical landmarks and pose of the occupant 1 can be retrieved using this image i21 and be used to accurately infers a three-dimensional information of the occupant 1 inside the vehicle. Using a deep-learning algorithm, also called deep-learning model, the retrieval of the anatomical landmarks and pose of the occupant 1 is facilitated, therefore offering a time effective solution, on top of a cost-effective solution.

In the current embodiment, this assessment S2 is part of an eyesight monitoring algorithm. Other embodiment, where the assessment S2 of the sitting position is used to infer other driving behavior, are also possible, as described previously in this disclosure.

Here, the detection of the sitting position, and whether the occupant 1, here, the driver, is leaning forward is used to monitor an eventual compensatory behavior indicative of an eyesight deficiency. Therefore, a frequency counter F is set to zero at the start of the method, i.e. here, when the driver's face is detected in the imaging device 30 field of view.

Then, after the calibration S1 is over, for each captured image of the occupant 1 where the sitting position is assessed to be in the "leaning forward" case, the frequency counter F is incremented in step S3. This frequency counter F counts how often during a drive, does the driver leans forward compared to his/her neutral driving position.

In another embodiment, instead of rising the count at every single occurrence, a static leaning forward state must be established in order to rise the counter F, meaning the occupant 1 has to remain still in the leaning forward state for a certain duration. This could prevent the number of false alarms. For instance, in this embodiment, it can be decided that the occupant 1 must remain in the leaning forward posture for at least 4 seconds, before incrementing the frequency counter. Given the frame rate here of 8 frames per second based on the deep-learning algorithm frame rate, a succession of 32 consecutive images of the occupant 1 must be accessed as in the "leaning forward" case according to the disclosed method, before the frequency counter is raised.

In the embodiment wherein the assessment S2 is done as part of an eyesight monitoring, the frequency counter F is then compared to an alarm threshold. This alarm threshold gives a frequency above which, for a given duration, a comportment can be deemed abnormal.

This alarm threshold is based for instance on a statistical study conducted by the applicant to quantify the occurrence in a given time window of such compensatory behavior, which aims at improving visibility, or overcome visual challenges.

For example, in a case where the duration of the vehicle ride is assumed to be 45 minutes, the applicant has found that the alarm threshold to be ranging between 4 and 6. In other words, a driver with no eyesight deficiency or an adequately corrected eyesight deficiency usually leans forward up to 6 times in a 45-minute car ride.

If the driver of the vehicle leans forward more than 6 times during the 45 minutes ride, it indicates a high probability of an eyesight deficiency. In this case, an appropriate alarm or suggestion must be communicated to the driver in step S4, through an audio message and/or a visual signal on a dashboard of the vehicle.

## Claims

1. A method for an assessment (S2) of a sitting position of an occupant (1) inside a vehicle, the method being **characterized by** the following steps:

   a. capturing (S21) an image (i21) of said occupant (1),
   b. analyzing (S22) said image (i21) of the occupant (1) to provide 2D coordinates in said image (i21) of pre-established anatomical landmarks 210 (210) and at least one parameter representative of a pose (212) of the occupant (1),
   c. computing (S23) distances using said 2D coordinates of said pre-established anatomical landmarks (212),
   d. normalizing (S24) the computed distances using the at least one parameter representative of a pose (212) of the occupant (1),
   e. computing (S25) a mean anatomical distance (M) using the normalized distances,
   f. comparing (S26) said mean anatomical distance (M) to a threshold value (X) to assess the sitting position of said occupant (1).

2. A method according to claim 1, wherein the at least one parameter representative of a pose (212) of the occupant (1) comprises a yaw angle of a head pose.

3. A method according to any of claims 1 or 2, wherein the at least one parameter representative of a pose (212) of the occupant (1) comprises a pitch angle of a head pose.

4. A method according to any of claims 1 to 3, wherein the step of analyzing (S22) the image (i21) of the occupant (1) to provide 2D coordinates of pre-established anatomical landmarks (210) and the least one parameter representative of a pose (212) of the occupant (1) is performed by a machine learning algorithm.

5. A method according to any of claims 1 to 4, wherein the pre-established anatomical landmarks (210) are situated in an area corresponding to the occupant's face.

6. A method according to claim 5, wherein two distances are computed using the said 2D coordinates in the captured image (i21), one distance represents a vertical bone structure, while the other distance represents a horizontal bone structure.

7. A method according to any of claims 1 to 6, wherein the said threshold value (X) is ascertained by performing a calibration (S1), said calibration (S1) comprises repeating the following steps during a calibration time period ($T_{cab}$):

   a. capturing (S11) an image (i11) of the occupant (1),
   b. analyzing (S12) the image (i11) of the occupant (1) to provide 2D coordinates of pre-established anatomical landmarks (210) and at least one parameter representative of a pose (212) of the occupant (1),
   c. computing (S13) distances using the said 2D coordinates of the said pre-established anatomical landmarks (210),
   d. normalizing (S14) the computed distances using the at least one parameter representative of a pose (212) of the occupant (1),
   e. computing (S15) a mean anatomical distance using the normalized distances,

and at the end of the calibration (S1) time period, computing (S17) the threshold value (X) as a function of a mean of all the mean anatomical distances computed during the calibration time period ($T_{cab}$).

8. A method according to claim 7, wherein the calibration (S1) is run every time a new occupant (1) is detected inside the vehicle.

9. A method according to any of claims 1 to 8, wherein the assessment (S2) of the sitting position of the occupant (1) comprises assessing whether said occupant (1) is leaning forward, backward, or is in a neutral position.

10. A method according to claim 8 in the dependency of claim 7, wherein the threshold value (X) is ascertained, while the said occupant (1) remains sat in the neutral position.

11. A method according to any of claims 9 or 10, wherein a counter (F) is set-up, to count the occurrence of the occupant (1) leaning forward and wherein based on said counter count, an alert about an eyesight condition of the occupant (1) is raised.

12. A monitoring system configured to perform an assessment (S2) of the sitting position of an occupant (1) inside a vehicle, the monitoring system (3) comprising of an imaging device (30), an image processing unit (32), and a computation unit (34), wherein:

   a. the imaging device (30) is configured to capture an image (i11, i21) of the occupant (1),
   b. the image processing unit (32) is configured to retrieve 2D coordinates of pre-established anatomical landmarks (210) and at least one parameter representative of a pose (212) of the occupant (1) from the captured image (i11, i21),

c. the computation unit (34) establishes a normalized mean anatomical distance (M) based on the 2D coordinates and the at least one parameter representative of a pose (212) of the occupant (1),

d. the computation unit (34) is configured to compare the normalized mean anatomical distance (M) to a stored threshold value (X) so as to provide an assessment of the sitting position of the occupant (1).

13. A monitoring system (3) according to claim 12, wherein the imaging device (30) is an RGB camera.

14. A monitoring system (3) according to claim 12, wherein the imaging device (30) is an infrared camera.

15. A monitoring system (3) according to any of claim 12 to 14, wherein the image processing unit (32) is suitable to perform an image analysis by means of at least an artificial neural network.

# Fig.1

right-left

front-back

up-down

# Fig.2

# Fig.3

...

# Fig.4

# Fig.5

Europäisches Patentamt

European Patent Office

Office européen des brevets

# EUROPEAN SEARCH REPORT

**Application Number**

EP 24 17 0105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/032825 A1 (FUNG KIN C [US] ET AL) 1 February 2018 (2018-02-01) * abstract * * paragraphs [0003], [0004], [0038] - [0097] * * figures 1B, 3A * | 1-15 | INV. G06V20/59 G06V40/10 |
| A | US 2022/388527 A1 (BARTH ALEXANDER [DE] ET AL) 8 December 2022 (2022-12-08) * abstract * * paragraphs [0007] - [0010], [0047] - [0053] * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 15 August 2024 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 17 0105

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2024

| Patent document cited in search report | Publication date | Patent family member(s) | Publication date |
|---|---|---|---|
| US 2018032825 A1 | 01-02-2018 | CN 107665330 A | 06-02-2018 |
| | | DE 102017212935 A1 | 01-02-2018 |
| | | US 2018032825 A1 | 01-02-2018 |
| US 2022388527 A1 | 08-12-2022 | CN 115439832 A | 06-12-2022 |
| | | EP 4099214 A1 | 07-12-2022 |
| | | US 2022388527 A1 | 08-12-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PRADOS-TORREBLANCA, A.** ; **BUENAPOSADA, J. M.** ; **BAUMELA, L.** *Shape Preserving Facial Landmarks with Graph Attention Networks*, 2022